# EUROPÄISCHE PATENTSCHRIFT

(11) **EP 2 525 121 B1**
(45) Veröffentlichungstag und Bekanntmachung des Hinweises auf die Patenterteilung: **14.06.2017**
(21) Anmeldenummer: 12168490.6
(22) Anmeldetag: 18.05.2012
(51) Int. Cl.: F16K 1/46, F24D 19/10, F16K 27/02

(54) **Ventileinsatzelement**
Valve insert element
Élément de garniture de soupape

(30) Priorität: 19.05.2011 DE 102011050475; 19.01.2012 DE 102012100433
(43) Veröffentlichungstag der Anmeldung: 21.11.2012
(73) Patentinhaber: Caradon Stelrad B.V., 2200 Herentals (BE)
(72) Erfinder: Grauls, Roger, 3971 Heppen (BE)
(74) Vertreter: Bauer, Dirk

(56) Entgegenhaltungen:
- WO-A1-2007/095952
- DE-A1- 4 325 738
- DE-U1- 20 104 315
- FR-A1- 2 533 656

## Beschreibung

### Einleitung

Set aus einem Verbindungsstück und einem darin eingesetzten Ventileinsatzelement, insbesondere ein solches zum Verbinden zweier Heizplatten eines Heizkörpers, aufweisend einen Ventilkörper und einen Anschlussabschnitt, der mittels mindestens eines umlaufenden Dichtungselements dichtend an einen Verbindungsabschnitt des Verbindungsstücks anschließt, wobei das Ventileinsatzelement einen Durchlassquerschnitt aufweist, wobei der Ventilkörper in einer Schließstellung den Durchlassquerschnitt fluiddicht verschließt und in einer Öffnungsstellung den Durchlassquerschnitt freigibt.

### Stand der Technik

Ventileinsatzelemente der eingangs beschriebenen Art sind aus dem Stand der Technik bereits bekannt. Um ihre Funktion zu erfüllen, müssen sie dichtend in das Verbindungsstück eingesetzt werden, so dass ein Durchfluss des jeweiligen Heizfluids durch das Verbindungsstück nur in solchem Maße erfolgen kann, in dem der Ventilkörper des Ventileinsatzelements den Durchlassquerschnitt freigibt. Sobald der Durchlassquerschnitt mittels des Ventilkörpers geschlossen ist, soll der Fluss des Heizfluids durch das Verbindungsstück vollständig unterbunden sein. Entsprechend ist es notwendig, dass sich das Ventileinsatzelement dichtend an das Verbindungsstück anfügt.

Dies wird gemäß dem Stand der Technik typischerweise mittels eines axialen Dichtungselements erreicht, das an einem vorderen Ende des Ventileinsatzelements über eine vordere Stirnfläche desselben vorsteht und auf eine korrespondierende (ebene) Dichtfläche des Verbindungsstücks aufgedrückt wird, wodurch ein stirnseitiger Spaltbereich zwischen dem Ventileinsatzelement und dem Verbindungsstück abgedichtet wird. Derartige Dichtungselemente, wie sie beispielsweise aus der DE 196 14 330 C1 und der WO 2007/095952 A1 bekannt sind, weisen jedoch den Nachteil auf, dass das Ventileinsatzelement und das Verbindungsstück sehr genau aufeinander abgestimmt sein müssen. Dies resultiert aus der stirnseitigen Abdichtung. Kommt es beispielsweise zu Maßabweichungen auf Seiten des Ventileinsatzelements, so dass dessen axiale Länge minimal kleiner ausfällt, als planerisch vorgesehen ist, kann es vorkommen, dass selbst bei einem vollständigen Einführen des Ventileinsatzelements in das Verbindungsstück das stirnseitige Dichtungselement nicht ausreichend stark auf die Dichtfläche des Verbindungsstücks gepresst wird und die Dichtwirkung nicht vollständig entfaltet werden kann. In der Folge kommt es zu unerwünschten Leckagen, das heißt der Heizkörper kann nicht vollständig ausgeschaltet werden.

Dieses Problem ist auch in der EP 2 278 235 A2 erkannt worden. Zur Lösung schlägt diese daher ein radiales Dichtungselement vor, das heißt ein solches Dichtungselement, das im Bereich eines Anschlussabschnitts des Ventileinsatzelements radial über eine innere Mantelfläche des Anschlussabschnitts nach innen vorsteht. Dieser Anschlussabschnitt kann schließlich über ein korrespondierendes Rohrstück des Verbindungsstücks "gestülpt" werden, so dass der Anschlussabschnitt des Ventileinsatzelements teleskopartig mit dem Rohrstück zusammenwirkt. Durch das Aufschieben des Anschlussabschnitts des Ventileinsatzelements über das besagte Rohrstück wird das Dichtungselement - da es über die Mantelfläche des Anschlussabschnitts vorsteht - gegen das Rohrstück "gepresst" und entfaltet so eine (radial) dichtende Wirkung. Im Unterschied zu den stirnseitigen Dichtungen kann mittels einer solchen Dichtung der Anschlussabschnitt quasi beliebig entlang des Rohrstücks axial bewegt werden, ohne dass die Dichtwirkung zwischen dem Anschlussabschnitt und dem Verbindungsstück verloren geht. Folglich ist eine sehr geringe axiale Maßtoleranz, wie sie bei stirnseitigen Abdichtungen erforderlich ist, nicht notwendig. Die erforderliche radiale Maßtoleranz lässt sich im Vergleich sehr einfach einhalten.

Eine ähnliche Variante ist ferner der DE 100 14 454 A1 entnehmbar, die ebenfalls einen Anschlussabschnitt eines Ventileinsatzelements mit einem innen liegenden radialen Dichtungsring zeigt, der einen rohrförmigen Verbindungsabschnitt des Verbindungsstücks umschließt und dadurch abdichtet.

Eine weitere ähnliche Ausführung zeigt die Schrift DE 103 49 925 A1. Diese offenbart einen Anschlussabschnitt eines Ventileinsatzelements, dessen Durchmesser kleiner ist als derjenige eines rohrförmigen Verbindungsabschnitts des Verbindungsstücks. Folgerichtig ist der Anschlussabschnitt mit einem umlaufenden Dichtungsring versehen, der in einer umlaufenden Nut an der äußeren Mantelfläche des Anschlussabschnitts angeordnet ist. Dieser Anschlussabschnitt wird in den rohrförmigen Verbindungsabschnitt eingeführt und dabei von diesem umfasst, wobei der Dichtungsring, der über die äußere Mantelfläche des Anschlussabschnitts vorsteht, gepresst gegen eine innere Mantelfläche des Verbindungsabschnitts gepresst wird und dadurch seine Dichtungswirkung entfaltet.

Eine Einschränkung der in der EP 2 278 235 A2 genannten Lösung liegt in dem Rohrstück des Verbindungsstücks, ohne welches das radiale Dichtungselement nicht funktioniert. Entsprechend ist das Ventileinsatzelement in seiner Einsetzbarkeit derart eingeschränkt, dass es für Verbindungsstücke, die kein Rohrstück aufweisen, nicht eingesetzt werden kann. Im Fall der Produktion neuer Verbindungsstücke ist dies zwar akzeptabel, da diese stets mit einem entsprechenden Rohrstück gefertigt werden können. Hinsichtlich der bereits im Umlauf befindlichen Verbindungsstücke ist dies jedoch nicht möglich. Das in der EP 2 278 235 A2 vorgeschlagene Ventileinsatzelement ist mithin nicht abwärtskompatibel. Das vorgeschlagene Ventileinsatzelement eignet sich daher nicht zum Austausch eines beschädigten oder aus sonstigen Gründen unbrauchbar gewordenen Ventileinsatzelements, das in einem Verbindungsstück angeordnet werden muss, welches kein Rohrstück aufweist.

Im weiteren Umfeld der vorliegenden Erfindung wird zudem auf die Dokumente DE 43 25 738 A 1, FR 2 533 656 A1 und DE 201 04 315 U1 verwiesen.

### Aufgabe

Der vorliegenden Erfindung liegt entsprechend die Aufgabe zugrunde, ein Ventileinsatzelement hervorzubringen, bei dem zum einen auf die Einhaltung besonders geringer Fertigungstoleranzen verzichtet werden kann und zum anderen ein Einsatz des Ventileinsatzelements in bereits ausgelieferten Verbindungsstücken trotzdem ohne Weiteres möglich ist.

### Lösung

Die zugrunde liegende Aufgabe wird ausgehend von dem Ventileinsatzelement der eingangs beschriebenen Art erfindungsgemäß dadurch gelöst, dass in dem Anschlussabschnitt zwei separate umtaufende Dichtungselemente angeordnet sind, wobei das erste Dichtungselement an einer dem Verbindungsabschnitt zugewandten Stirnfläche des Anschlussabschnitts und das zweite Dichtungselement an einer inneren Mantelfläche des Anschlussabschnitts angeordnet sind, sodass Dichtmaterial der Dichtungselemente, mittels dessen der Anschlussabschnitt gegen den Verbindungsabschnitt abdichtbar ist, radial über die innere Mantelfläche des Anschlussabschnitts und axial über die dem Verbindungsabschnitt zugewandte Stirnfläche des Anschlussabschnitts vorsteht, wobei eine Abdichtung des Anschlussabschnitts gegen den Verbindungsabschnitt mittels lediglich eines der Dichtungselemente erfolgt.

Alternativ wird die zugrunde liegende Aufgabe erfindungsgemäß dadurch gelöst, dass in dem Anschlussabschnitt zwei separate umlaufende Dichtungselemente angeordnet sind, wobei das erste Dichtungselement an einer dem Verbindungsabschnitt zugewandten Stirnfläche des Anschlussabschnitts und das zweite Dichtungselement an einer äußeren Mantelfläche des Anschlussabschnitts angeordnet sind, sodass Dichtmaterial der Dichtungselemente, mittels dessen der Anschlussabschnitt gegen den Verbindungsabschnitt abdichtbar ist, radial über die äußere Mantelfläche des Anschlussabschnitts und axial über die dem Verbindungsabschnitt zugewandte Stirnfläche des Anschlussabschnitts vorsteht, wobei eine Abdichtung des Anschlussabschnitts gegen den Verbindungsabschnitt mittels lediglich eines der Dichtungselemente erfolgt.

Weiterhin alternativ wird die zugrunde liegende Aufgabe erfindungsgemäß dadurch gelöst, dass in dem Anschlussabschnitt drei separate Dichtungselemente angeordnet sind, wobei eines der drei Dichtungselemente an einer dem Verbindungsabschnitt zugewandten Stirnfläche des Anschlussabschnitts, eines an einer inneren Mantelfläche des Anschlussabschnitts und eines an einer äußeren Mantelfläche des Anschlussabschnitts angeordnet sind, sodass Dichtmaterial der Dichtungselemente, mittels dessen der Anschlussabschnitt gegen den Verbindungsabschnitt abgedichtet ist, sowohl radial über die innere Mantelfläche als auch radial über die äußere Mantelfläche des Anschlussabschnitts und axial über die dem Verbindungsabschnitt zugewandte Stirnfläche des Anschlussabschnitts vorsteht.

Unter dem Dichtmaterial wird dabei dasjenige Material verstanden, aus dem das mindestens eine Dichtungselement gebildet ist. Gemäß der Erfindung ist es vorgesehen, dass mehrere separate Dichtungselemente an dem Anschlussabschnitt des Ventileinsatzelements angeordnet sind, wobei jedes Dichtungselement jeweils aus einem Dichtmaterial gefertigt ist. Die Dichtmaterialien separater Dichtungselemente können dabei selbstverständlich unterschiedlich sein, sollten jedoch typischerweise identisch sein.

Durch das Überstehen des Dichtmaterials der mehreren Dichtungselemente in der beschriebenen Form (radial innen, radial außen, axial), wird bei einem Einsatz des Ventileinsatzelements in das Verbindungsstück - wirkungsgleich zu den Dichtungselementen gemäß dem Stand der Technik - eine "Pressung" beziehungsweise eine "Komprimierung" des/der jeweiligen Dichtungselemente bewirkt, wodurch eine gegenseitige Abdichtung der korrespondierenden Dichtflächen erreicht wird.

Erfindungsgemäß ist dabei die Verwirklichung einer axialen Dichtung (Dichtmaterial steht axial über die Stirnfläche des Anschlussabschnitts über) zwingend. Auf diese Weise ist die gewünschte Abwärtskompatibilität des erfindungsgemäßen Ventileinsatzelements sichergestellt, da das Ventileinsatzelement auch mit solchen Verbindungsstücken zusammenwirken kann, die kein Rohrstück aufweisen.

Ebenso ist erfindungsgemäß eine Kombination dieser axialen Dichtungsfunktion mit mindestens einer radialen Dichtungsfunktion zwingend. Dadurch ist die Kompatibilität mit einem solchen Verbindungsstück, das über ein vorstehend beschriebenes Rohrstück verfügt, sichergestellt. Das erfindungsgemäße Ventileinsatzelement ist somit gleichermaßen für neuartige (mit Rohrstücken versehene) wie auch für herkömmliche Ventileinsatzelemente geeignet.

Im Sinne der Merkmalskombination gemäß Anspruch 3 sind die Dichtungselemente schließlich so ausgebildet, dass sogar beide Varianten der radialen Dichtungswirkung gleichzeitig möglich sind. Insbesondere im letztgenannten Fall ist die Flexibilität des erfindungsgemäßen Ventileinsatzelements hinsichtlich der Kompatibilität mit unterschiedlichen Verbindungsstücken beziehungsweise unterschiedlich ausgebildeten Verbindungsabschnitten maximal, da es sich bei dem in dem Verbindungsabschnitt ausgebildeten Rohrstück gleichermaßen um ein solches handeln kann, das einen geringeren Durchmesser als der Anschlussabschnitt aufweist, als auch um ein solches, dessen Durchmesser denjenigen des Anschlussabschnitts übersteigt.

Die Ausführung von mehreren Dichtungselementen ermöglichst es, auf die nach dem Stand der Technik üblichen O-Ringe als Dichtungselemente zurückzugreifen, wobei der Anschlussabschnitt des Ventileinsatzelements über entsprechende Nuten verfügen sollte, in die die O-Ringe eingelegt werden können. Die O-Ringe sind dabei aus dem Dichtmaterial gefertigt. Gegebenenfalls können auch unterschiedliche Materialien für die O-Ringe genutzt werden.

Unabhängig davon, wie viele Dichtungselemente im konkreten Fall vorgesehen werden (zwei oder drei) und welche Querschnittsform diese aufweisen, ist es stets besonders vorteilhaft, wenn das Dichtmaterial, aus dem die Dichtungselemente gebildet sind, von einem elastomeren Material gebildet ist. Ein Elastomer bietet insbesondere den Vorteil ausgezeichneter elastischer Eigenschaften, das heißt, dass sich ein derartiges Dichtungselement besonders einfach komprimieren lässt und jederzeit, sobald es sich frei verformen kann, wieder in seine Ausgangsform zurückgeht. Diese vorteilhaften elastischen Eigenschaften verhelfen zu einer guten Dichtwirkung. Ferner bietet ein elastomeres Dichtungselement den besonderen Vorteil, dass es mittels eines Spritzgussverfahrens aufgebracht werden kann, das heißt in eine Spritzgussmaschine eingelegt und dort in dem Werkzeug umspritzt wird. Dies erlaubt komplizierte Geometrien und aufwendige Querschnittsformen, wobei sich das Dichtungselement im Zuge der Herstellung individuell an die Formen des Anschlussabschnitts des Ventileinsatzelements anpassen kann.

Der letztgenannte Vorteil kommt besonders zum Tragen, wenn der Anschlussabschnitt eine komplizierte Geometrie aufweist. Somit kann es besonders von Vorteil sein, wenn das Ventileinsatzelement zwecks einer guten Fixierung des Dichtungselements eine hinterschnittene Nut aufweist und das Dichtungselement durch ein Eingreifen mit dieser Nut besonders gut an dem Anschlussabschnitt verankert wird. Das Dichtungselement könnte in einem solchen Fall besonders einfach durch Spritzgießen eingebracht werden und könnte sich an derartige Formen anpassen.

### Ausführungsbeispiele

Das vorstehend beschriebene Ventileinsatzelement wird nachfolgend anhand von Ausführungsbeispielen, die in den Figuren dargestellt sind, näher erläutert.

Es zeigt:
- Fig. 1:: Ein nicht patentgemäßes Ventileinsatzelement in Form eines Regelventils in einem Verbindungsstück,
- Fig. 2:: Ein erstes erfindungsgemäßes Ventileinsatzelement in Form eines Regelventils in dem Verbindungsstück gemäß Figur 1,
- Fig. 3:: Ein zweites erfindungsgemäßes Ventileinsatzelement in Form eines Entlüftungsventils in dem Verbindungsstück gemäß Figur 1,
- Fig. 4:: wie Figur 2, jedoch in einem zweiten Verbindungsstück, und
- Fig. 5:: wie Figur 3, jedoch in dem zweiten Verbindungsstück,

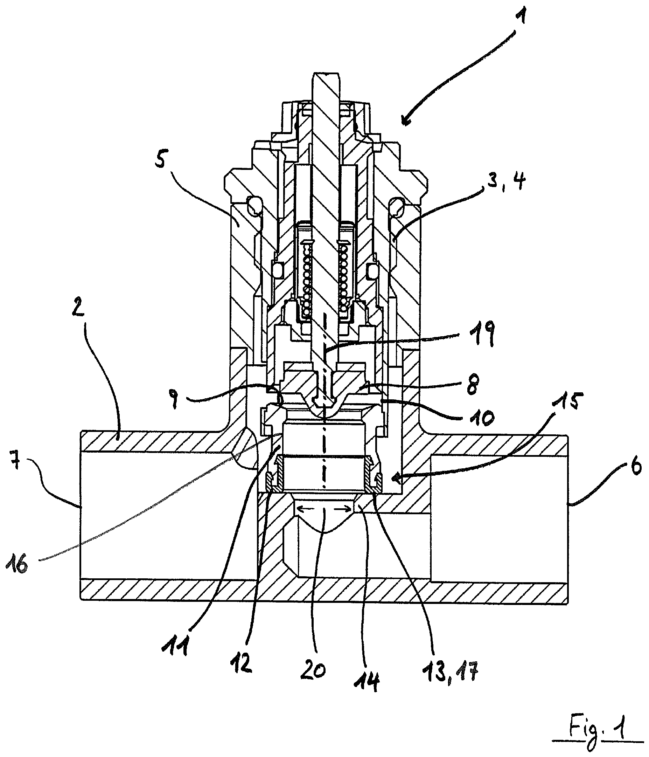

In einem ersten nicht patentgemäßen Ausführungsbeispiel, das in Figur 1 dargestellt ist, ist ein nicht patentgemäßes Ventileinsatzelement 1 in ein erstes Verbindungsstück 2 eingeschraubt. Eine Verschraubung des Ventileinsatzelements 1 und des Verbindungsstücks 2 erfolgt mittels korrespondierender Gewindeabschnitte 3, 4, wobei Gewindeabschnitt 3 des Ventileinsatzelements 1 an einer Mantelfläche desselben angeordnet ist und Gewindeabschnitt 4 des Verbindungsstücks 2 an einer inneren Mantelfläche eines Verbindungselements 5 des Verbindungsstücks 2 angeordnet ist.

Das Verbindungsstück 2 weist zwei Öffnungsquerschnitte 6, 7 auf, die typischerweise jeweils an eine Heizplatte eines Heizkörpers angeschlossen sind. Ein Durchfluss eines Heizmediums von einem der Öffnungsquerschnitte 6, 7 kann mittels des Ventileinsatzelements 1 gesteuert werden. Hierzu weist das Ventileinsatzelement 1 einen Ventilköper 8 auf, der mit einem Dichtsitz 9 zusammenwirken kann und auf diese Weise einen Durchlassquerschnitt 10, der die Öffnungsquerschnitte 6, 7 des Verbindungsstücks 2 strömungstechnisch miteinander verbindet, verschließen oder freigeben kann. Der Dichtsitz 9 des Ventileinsatzelements 1 ist an einer oberen Stirnfläche eines rohrförmigen Anschlussabschnitts 11 des Ventileinsatzelements 1 ausgebildet. Dieser Anschlussabschnitt 11 ist ein Bestandteil des Ventileinsatzelements 1. Um einen Durchfluss des Heizmediums von einem der Öffnungsquerschnitte 6, 7 zu dem jeweilig anderen Öffnungsquerschnitt 6, 7 vollständig unterbinden zu können ist es folglich notwendig, den Ventilkörper 8 mit dem Dichtsitz 9 des Ventileinsatzelements 1 in Eingriff zu bringen und ferner den Anschlussabschnitt 11 des Ventileinsatzelements 1 dichtend an einen Verbindungsabschnitt 14 des Verbindungsstücks 2 anzuschließen.

Letzteres erfolgt mittels eines Dichtungselements 12, das besonders gut in einem Detail in Figur 9 erkennbar ist. Das Dichtungselement 12 ist in einem Befestigungsbereich 15 des Anschlussabschnitts 11 des Ventileinsatzelements 1 angeordnet und wirkt in einem eingebauten Zustand des Ventileinsatzelements 1 dichtend mit einem Dichtsitz 13 des Verbindungsstücks 2 zusammen, wobei der Befestigungsbereich 15 in einem unteren Endbereich des Anschlussabschnitts 11 positioniert ist. Der Dichtsitz 13 ist in dem Verbindungsabschnitt 14 des Verbindungsstücks 2 angeordnet, wobei der Verbindungsabschnitt 14 eine Öffnung 20 aufweist, durch die das Heizfluid strömen kann.

Das Dichtungselement 12 weist einen U-förmigen Querschnitt auf, wobei es eine Wandung des rohrförmigen Anschlussabschnitts 11 des Ventileinsatzelements 1 derartig umgreift, dass es (beziehungsweise das Dichtmaterial des Dichtungselements 12) über eine innere Mantelfläche 16 des Anschlussabschnitts 11 radial nach innen vorsteht, über eine Stirnfläche 17 des Anschlussabschnitts 11 axial vorsteht und ferner über eine äußere Mantelfläche 18 des Anschlussabschnitts 11 radial nach außen vorsteht. Der Anschlussabschnitt 11 des Ventileinsatzelements 1 ist in dem Befestigungsbereich 15 in Form einer hinterschnittenen Nut ausgeführt. Auf diese Weise kann das Dichtungselement 12, das vorteilhafterweise mittels eines Spritzgussverfahrens aufgebracht wird, besonders fest mit dem Anschlussabschnitt 11 verbunden werden, indem das Dichtungselement 12 und der Befestigungsbereich 15 miteinander verkanten.

Im Fall des ersten, nicht patentgemäßen Ausführungsbeispiel gemäß Figur 1 wirkt das Dichtungselement 12 insbesondere durch eine axiale Dichtungswirkung des Dichtungselements 12 in Verbindung mit dem Dichtsitz 13 des Verbindungsabschnitts 14. Sobald der Anschlussabschnitt 11 dichtend an das Verbindungsstück 2 angeschlossen ist, kann schließlich der Durchfluss des Heizmediums durch das Verbindungsstück 2 allein mittels einer Verschiebung des Ventilkörpers 8 entlang einer Längsachse 19 des Ventileinsatzelements 1 erfolgen, wobei in einem verschlossenen Zustand der Ventilkörper 8 dichtend mit dem Dichtsitz 9 des Anschlussabschnitts 11 zusammenwirkt und der Durchlassquerschnitt 10 entsprechend verschlossen ist.

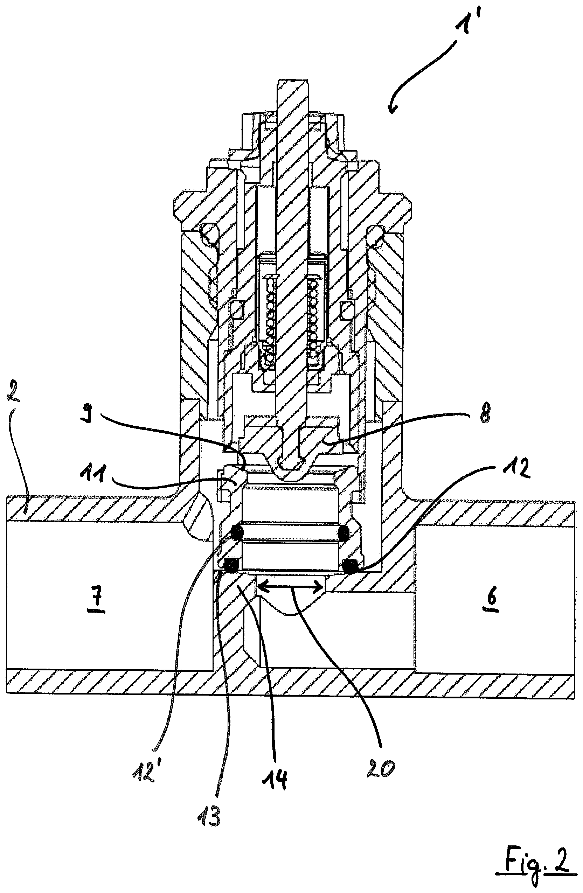

Ein in Figur 2 gezeigtes erfindungsgemäßes Ausführungsbeispiel ist dem aus Figur 1 sehr ähnlich. Ein Unterschied besteht in einer anderen Ausführung eines Ventileinsatzelements 1' gegenüber dem Ventileinsatzelement 1. Das Ventileinsatzelement 1' verfügt nämlich in seinem Verbindungsabschnitt 11 nicht über ein einziges Dichtungselement 12, sondern erfindungsgemäß über zwei Dichtungselemente 12, 12'. Aufgrund der Ausführungsform des Verbindungsstücks 2 kommt im gezeigten Beispiel dennoch lediglich das Dichtungselement 12 zum Einsatz, während das Dichtungselement 12' erfindungsgemäß funktionslos bleibt. Ein dichtender Anschluss des Anschlussabschnitts 11 des Ventileinsatzelements l' an den Verbindungsabschnitt 14 des Verbindungsstücks 2 erfolgt entsprechend lediglich mittels des Dichtungselements 12, das hier als O-Ring ausgeführt ist, wobei ein Dichtmaterial, aus dem das Dichtungselement 12 gebildet ist, axial über eine dem Verbindungsabschnitt 14 zugewandte Stirnfläche 17 des Anschlussabschnitts 11 übersteht.

Um eine Abdichtung zwischen dem Anschlussabschnitt 11 und dem Verbindungsabschnitt 14 herzustellen, muss das Ventileinsatzelement 1' so weit in das Verbindungsstück 2 eingeschoben werden, dass zwischen dem Dichtungselement 12 und dem Dichtsitz 13 des Verbindungsabschnitts 14 ein dichtender Kontakt entsteht. Aufgrund dieses dichtenden Kontakts ist es auch beim zweiten Ausführungsbeispiel wunschgemäß ausschließlich mittels eines Abhebens des Ventilkörpers 8 von dem Dichtsitz 9 möglich, eine Verbindung zwischen den Öffnungsquerschnitten 6 und 7 herzustellen.

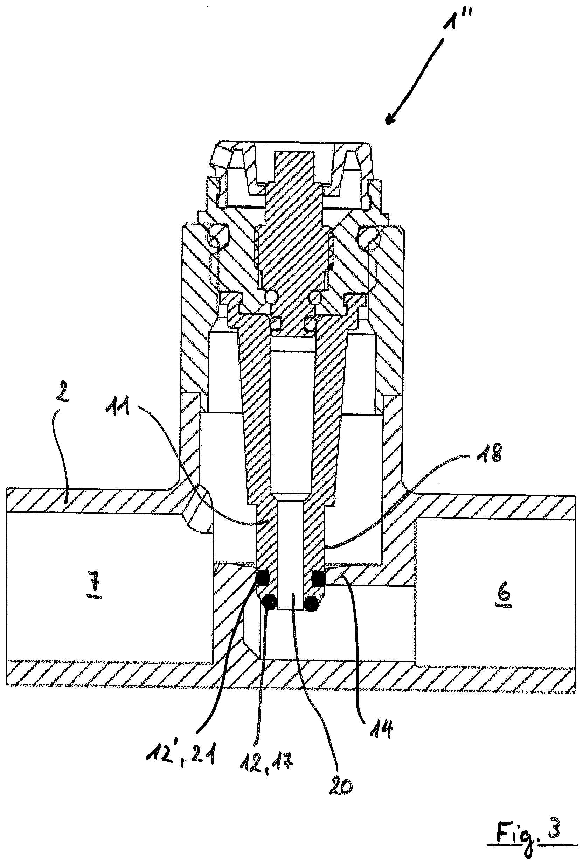

In einem weiteren erfindungsgemäßen Ausführungsbeispiel, welches in Figur 3 abgebildet ist, ist ein Ventileinsatzelement 1" mit dem Verbindungsstück 2 kombiniert. Während es sich bei den Ventileinsatzelementen 1, 1' jeweils um Regelventile zur Regelung eines Durchflusses eines Heizfluids handelt, ist das Ventileinsatzelement 1" als Entlüftungsventil ausgeführt. Der Anschlussabschnitt 11 des Ventileinsatzelements 1" weist gegenüber den übrigen Ventileinsatzelementen 1,1' einen erheblich kleineren Durchmesser auf, so dass der Anschlussabschnitt 11 ohne Weiteres in die Öffnung 20 eingeführt werden kann. Das Ventileinsatzelement 1" ist ebenso wie das Ventileinsatzelement 1' mit zwei Dichtungselementen 12, 12" ausgestattet, wobei das Dichtungselement 12" im Unterschied zum Dichtungselement 12' gemäß dem vorgenannten Beispiel an der äußeren Mantelfläche 18 des Anschlussabschnitts 11 des Ventileinsatzelements 1" angeordnet ist. Eine Abdichtung des Anschlussabschnitts 11 gegen den Verbindungsabschnitt 14 erfolgt mittels eben dieses radial nach außen über den Verbindungsabschnitt 11 vorstehenden Dichtungselements 12", welches mit einer inneren Wandung 21 des Verbindungsabschnitts 14 des Verbindungsstücks 2 zusammenwirkt. Das Dichtungselement 12, welches an der Stirnfläche 17 des Anschlussabschnitts 11 angeordnet ist, bleibt hier funktionslos.

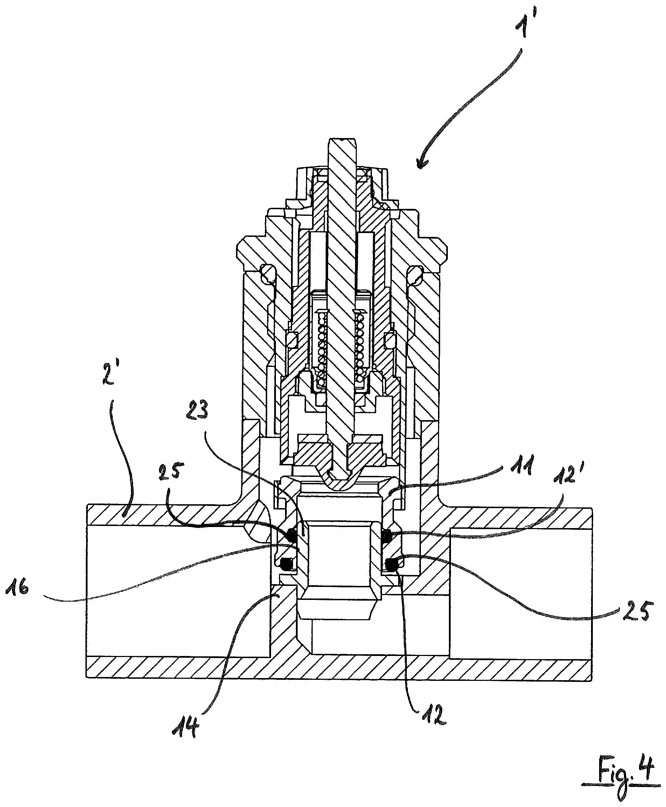

In einem weiteren erfindungsgemäßen Ausführungsbeispiel, das in Figur 4 dargestellt ist, ist wiederum das Verbindungsstück 2' abgebildet, wobei es hier mit dem bereits erläuterten Ventileinsatzelement 1' kombiniert ist. In dem gezeigten Ausführungsbeispiel ist eine Abdichtung des Anschlussabschnitts 11 des Ventileinsatzelements 1' gegen das Rohrstück 23 des Verbindungsabschnitts 14 vor allem mittels des Dichtungselements 12' umgesetzt. Das stirnseitige Dichtungselement 12 bleibt hier funktionslos, da es nicht mit dem Dichtsitz 24 des Rohstücks 23 eingreift.

Für eine Funktionalität dieser Abdichtung ist entscheidend, dass ein Außendurchmesser des Rohrstücks 23 in etwa gleich einem Innendurchmesser des Anschlussabschnitts 11 ist, so dass beim Aufschieben des Anschlussabschnitts 11 auf das Rohrstück 23 das Dichtmaterial des Dichtungselements 12', welches über die innere Mantelfläche 16 des Anschlussabschnitts 11 vorsteht, komprimiert wird und so seine Dichtungswirkung entfaltet. Die Dichtungselemente 12, 12' sind jeweils in Nuten 25 eingelassen, die jedoch nicht "tief" genug sind, als dass die Dichtungselemente 12, 12' vollständig darin eingelassen werden könnten. Auf diese Weise steht zumindest ein Teil des Dichtmaterials des jeweiligen Dichtungselements 12, 12' immer über den Anschlussabschnitt 11 des Ventileinsatzelements 1' vor.

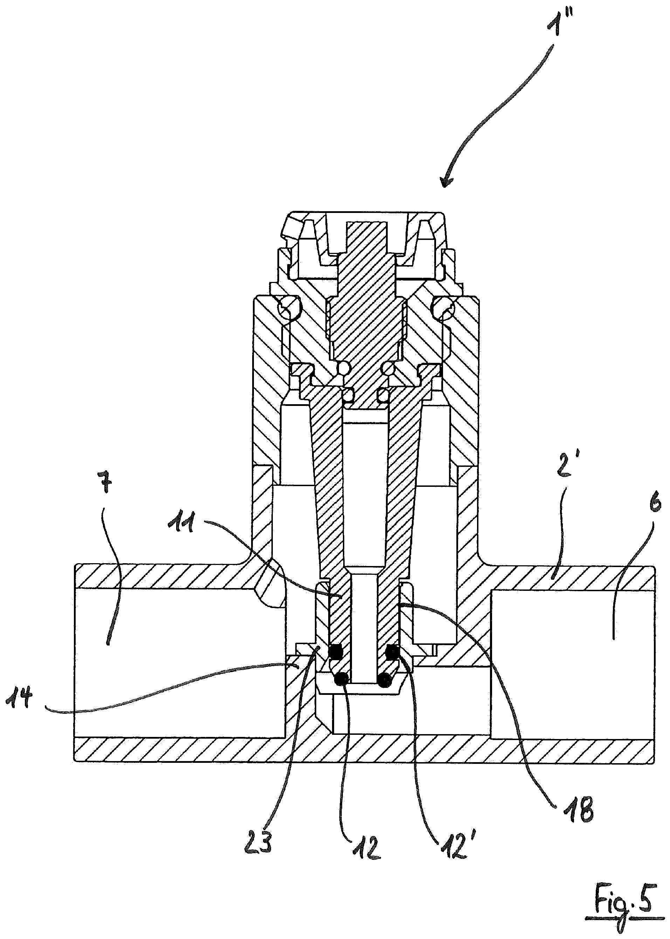

In einem weiteren erfindungsgemäßen Ausführungsbeispiel (Figur 5) ist das Ventileinsatzelement 1" gezeigt, welches hier in das Verbindungsstück 2' eingesetzt ist. Im Unterschied zu den Ventileinsatzelementen 1, 1' umfasst der Anschlussabschnitt 11 des Ventileinsatzelements 1" das Rohrstück 23 nicht etwa, sondern wird in dieses eingeführt. Entsprechend ist ein Innendurchmesser des Rohrstücks 23 in etwa gleich einem Außendurchmesser des Anschlussabschnitts 11. Eine Abdichtung beider Teile, also des Rohrstücks 23 gegen den Anschlussabschnitt 11, funktioniert dabei analog zur vorstehenden Erläuterung des Ausführungsbeispiels gemäß Figur 3 mittels des radial nach außen über die äußere Mantelfläche 18 des Anschlussabschnitts 11 vorstehenden Dichtungselements 12". Im Unterschied zu dem Ausführungsbeispiel gemäß Figur 3 ist hier allerdings eine Positionierung des Ventileinsatzelements 1" weniger kritisch, da eine Wegstrecke, entlang derer das Dichtungselement 12" problemlos mit dem Rohrstück 23 dichtend eingreift, erheblich länger ist, als beim dritten Ausführungsbeispiel. Demgemäß ist die Dichtwirkung bei einer Kombination des Ventileinsatzelements 1" mit dem Verbindungsstück 2' deutlich besser kontrollierbar, als bei der Kombination des Ventileinsatzelements 1" mit dem Verbindungsstück 2.

### Bezugszeichenliste

- 1, 1', 1": Ventileinsatzelement
- 2, 2': Verbindungsstück
- 3: Gewindeabschnitt
- 4: Gewindeabschnitt
- 5: Verbindungselement
- 6: Öffnungsquerschnitt
- 7: Öffnungsquerschnitt
- 8: Ventilkörper
- 9: Dichtsitz
- 10: Durchlassquerschnitt
- 11: Anschlussabschnitt
- 12: Dichtungselement
- 13: Dichtsitz
- 14: Verbindungsabschnitt
- 15: Befestigungsbereich
- 16: innere Mantelfläche
- 17: Stirnfläche
- 18: äußere Mantelfläche
- 19: Längsachse
- 20: Öffnung
- 21: innere Wandung
- 22: äußere Mantelfläche
- 23: Rohrstück
- 24: Dichtsitz
- 25: Nut
- 26: Zulauf

## Patentansprüche

1. Set aus einem Verbindungsstück (2, 2') und einem darin eingesetzten Ventileinsatzelement (1'), wobei das Verbindungsstück (2,2') insbesondere ein solches zum Verbinden zweier Heizplatten eines Heizkörpers ist, das Ventileinsatzelement (1') aufweisend einen Ventilkörper (8) und einen Anschlussabschnitt (11), der mittels mindestens eines umlaufenden Dichtungselements (12, 12') dichtend an einen Verbindungsabschnitt (14) des Verbindungsstücks (2, 2') anschließt, wobei das Ventileinsatzelement (1') einen Durchlassquerschnitt (10) aufweist, wobei der Ventilkörper (8) in einer Schließstellung den Durchlassquerschnitt (10) fluiddicht verschließt und in einer Öffnungsstellung den Durchlassquerschnitt (10) freigibt, **dadurch gekennzeichnet, dass** in dem Anschlussabschnitt (11) zwei separate umlaufende Dichtungselemente (12, 12') angeordnet sind, wobei das erste Dichtungselement (12) an einer dem Verbindungsabschnitt (14) zugewandten Stirnfläche (17) des Anschlussabschnitts (11) und das zweite Dichtungselement (12') an einer inneren Mantelfläche (16) des Anschlussabschnitts (11) angeordnet sind, sodass Dichtmaterial der Dichtungselemente (12, 12'), mittels dessen der Anschlussabschnitt (11) gegen den Verbindungsabschnitt (14) abdichtbar ist, radial über die innere Mantelfläche (16) des Anschlussabschnitts (11) und axial über die dem Verbindungsabschnitt (14) zugewandte Stirnfläche (17) des Anschlussabschnitts (11) vorsteht, wobei eine Abdichtung des Anschlussabschnitts (11) gegen den Verbindungsabschnitt (14) mittels lediglich eines der Dichtungselemente (12, 12') erfolgt.

2. Set aus einem Verbindungsstück (2, 2') und einem darin eingesetzten Ventileinsatzelement (1"), wobei das Verbindungsstück (2, 2') insbesondere ein solches zum Verbinden zweier Heizplatten eines Heizkörpers ist, das Ventileinsatzelement (1") aufweisend einen Ventilkörper und einen Anschlussabschnitt (11), der mittels mindestens eines umlaufenden Dichtungselements (12, 12') dichtend an einen Verbindungsabschnitt (14) des Verbindungsstücks (2, 2') anschließt, wobei das Ventileinsatzelement (1") einen Durchlassquerschnitt aufweist, wobei der Ventilkörper in einer Schließstellung den Durchlassquerschnitt fluiddicht verschließt und in einer Öffnungsstellung den Durchlassquerschnitt freigibt, **dadurch gekennzeichnet, dass** in dem Anschlussabschnitt (11) zwei separate umlaufende Dichtungselemente (12, 12') angeordnet sind, wobei das erste Dichtungselement (12) an einer dem Verbindungsabschnitt (14) zugewandten Stirnfläche (17) des Anschlussabschnitts (11) und das zweite Dichtungselement (12') an einer äußeren Mantelfläche (18) des Anschlussabschnitts (11) angeordnet sind, sodass Dichtmaterial der Dichtungselemente (12, 12'), mittels dessen der Anschlussabschnitt (11) gegen den Verbindungsabschnitt (14) abdichtbar ist, radial über die äußere Mantelfläche (18) des Anschlussabschnitts (11) und axial über die dem Verbindungsabschnitt (14) zugewandte Stirnfläche (17) des Anschlussabschnitts (11) vorsteht, wobei eine Abdichtung des Anschlussabschnitts (11) gegen den Verbindungsabschnitt (14) mittels lediglich eines der Dichtungselemente (12, 12') erfolgt.

3. Set aus einem Verbindungsstück und einem darin eingesetzten Ventileinsatzelement, wobei das Verbindungsstück insbesondere ein solches zum Verbinden zweier Heizplatten eines Heizkörpers ist, das Ventileinsatzelement aufweisend einen Ventilkörper und einen Anschlussabschnitt, der mittels mindestens eines umlaufenden Dichtungselements dichtend an einen Verbindungsabschnitt des Verbindungsstücks anschließt, wobei das Ventileinsatzelement einen Durchlassquerschnitt aufweist, wobei der Ventilkörper in einer Schließstellung den Durchlassquerschnitt fluiddicht verschließt und in einer Öffnungsstellung den Durchlassquerschnitt freigibt, **dadurch gekennzeichnet, dass** in dem Anschlussabschnitt drei separate Dichtungselemente angeordnet sind, wobei eines der drei Dichtungselemente an einer dem Verbindungsabschnitt zugewandten Stirnfläche des Anschlussabschnitts, eines an einer inneren Mantelfläche des Anschlussabschnitts und eines an einer äußeren Mantelfläche des Anschlussabschnitts angeordnet sind, sodass Dichtmaterial der Dichtungselemente, mittels dessen der Anschlussabschnitt gegen den Verbindungsabschnitt abgedichtet ist, sowohl radial über die innere Mantelfläche als auch radial über die äußere Mantelfläche des Anschlussabschnitts und axial über die dem Verbindungsabschnitt zugewandte Stirnfläche des Anschlussabschnitts vorsteht.

4. Set nach einem der Ansprüche 1 bis 3, **dadurch gekennzeichnet, dass** das Dichtmaterial von einem elastomeren Material gebildet ist.

5. Set nach einem der Ansprüche 1 bis 4, **dadurch gekennzeichnet, dass** der Anschlussabschnitt (11) in einem Befestigungsbereich (15), in dem die Dichtungselemente (12, 12') an dem Anschlussabschnitt (11) befestigt sind, in Form einer hinterschnittenen Nut ausgebildet ist.

## Claims

1. Set of a connecting piece (2, 2') and a valve insert element (1') inserted therein, wherein the connecting piece (2, 2') is in particular a connecting piece for connecting two heating plates of a radiator, the valve insert element (1') comprising a valve body (8) and an attachment section (11) which fastens sealingly on a connecting section (14) of the connecting piece (2, 2') by means of at least one circumferential sealing element (12, 12'), wherein the valve insert element (1') comprises an orifice cross-section (10), wherein the valve body (8) closes the orifice cross-section (10) in a fluid, tight manner in a closed position and releases the orifice cross-section (10) in an open position, **characterised in that** two separate circumferential sealing elements (12, 12') are arranged in the attachment section (11), wherein the first sealing element (12) is arranged at a front surface (17) of the attachment section (11) facing the connecting section (14), and the second sealing element (12') is arranged at an inner lateral area (16) of the attachment section (11), such that sealing material of the sealing elements (12, 12') by which the attachment section (11) can be sealed against the connecting section (14) radially protrudes over the inner lateral area (16) of the attachment section (11) and axially protrudes over the front surface (17) of the attachment section (11) facing the connecting section (14), wherein sealing of the attachment section (11) against the connecting section (14) occurs by means of only one of the sealing elements (12, 12').

2. Set of a connecting piece (2, 2') and a valve insert element (1") inserted therein, wherein the connecting piece (2, 2') is in particular a connecting piece for connecting two heating plates of a radiator, the valve insert element (1") comprising a valve body and an attachment section (11) which fastens sealingly on a connecting section (14) of the connecting piece (2, 2') by means of at least one circumferential sealing element (12, 12'), wherein the valve insert element (1") comprises an orifice cross-section, wherein the valve body closes the orifice cross-section in a fluid, tight manner in a closed position and releases the orifice cross-section in an open position, **characterised in that** two separate circumferential sealing elements (12, 12') are arranged in the attachment section (11), wherein the first sealing element (12) is arranged at a front surface (17) of the attachment section (11) facing the connecting section (14), and the second sealing element (12') is arranged at an outer lateral area (18) of the attachment section (11), such that sealing material of the sealing elements (12, 12') by which the attachment section (11) can be sealed against the connecting section (14) radially protrudes over the outer lateral area (18) of the attachment section (11) and axially protrudes over the front surface (17) of the attachment section (11) facing the connecting section (14), wherein sealing of the attachment section (11) against the connecting section (14) occurs by means of only one of the sealing elements (12, 12').

3. Set of a connecting piece and a valve insert element inserted therein, wherein the connecting piece is in particular a connecting piece for connecting two heating plates of a radiator, the valve insert element comprising a valve body and an attachment section which fastens sealingly on a connecting section of the connecting piece by means of at least one circumferential sealing element, wherein the valve insert element comprises an orifice cross-section, wherein the valve body closes the orifice cross-section in a fluid, tight manner in a closed position and releases the orifice cross-section in an open position, **characterised in that** three separate sealing elements are arranged in the attachment section, wherein one of the three sealing elements is arranged at a front surface of the attachment section facing the connecting section, one is arranged at an inner lateral area of the attachment section and one is arranged at an outer lateral area of the attachment section, such that sealing material of the sealing elements by which the attachment section is sealed against the connecting section radially protrudes over the inner lateral area as well as radially protrudes over the outer lateral area of the attachment section and axially protrudes over the front surface of the attachment section facing the connecting section.

4. Set according to any one of claims 1 to 3, **characterised in that** the sealing material is made of an elastomeric material.

5. Set according to any one of claims 1 to 4, **characterised in that** the attachment section (11) is formed as an undercut groove in a mounting area (15) in which the sealing elements (12, 12') are attached to the attachment section (11).

## Revendications

1. Ensemble composé d'une pièce de liaison (2, 2') et d'une garniture de soupape (1') placée dans cette dernière, dans lequel la pièce de liaison (2, 2') est en particulier un élément destiné à relier deux plaques chauffantes d'un corps chauffant, la garniture de soupape (1') comporte un corps de soupape (8) et un tronçon de raccordement (11), qui se raccorde de manière étanche à un tronçon de liaison (14) de la pièce de liaison (2, 2') au moyen d'au moins un élément d'étanchéité (12, 12') périphérique, dans lequel la garniture de soupape (1') a une section transversale de passage (10), dans lequel le corps de soupape (8) ferme, dans une position de fermeture, la section transversale de passage (10) de manière étanche aux fluides et dégage, dans une position d'ouverture, la section transversale de passage (10), **caractérisé en ce que** deux éléments d'étanchéité (12, 12') périphériques et séparés sont agencés dans le tronçon de raccordement (11), dans lequel le premier élément d'étanchéité (12) est agencé au niveau d'une surface frontale (17), tournée vers le tronçon de liaison (14), du tronçon de raccordement (11) et le deuxième élément d'étanchéité (12') est agencé au niveau d'une surface enveloppante (16) intérieure du tronçon de raccordement (11) de telle sorte que du matériau d'étanchéité des éléments d'étanchéité (12, 12'), au moyen duquel le tronçon de raccordement (11) peut être rendu étanche par rapport au tronçon de liaison (14), dépasse de façon radiale de la surface enveloppante (16) intérieure du tronçon de raccordement (11) et de façon axiale de la surface frontale (17), tournée vers le tronçon de liaison (14), du tronçon de raccordement (11), dans lequel une étanchéification du tronçon de raccordement (11) par rapport au tronçon de liaison (14) est effectuée au moyen seulement d'un des éléments d'étanchéité (12, 12').

2. Ensemble composé d'une pièce de liaison (2, 2') et d'une garniture de soupape (1") placée dans cette dernière, dans lequel la pièce de liaison (2, 2') est en particulier un élément destiné à relier deux plaques chauffantes d'un corps chauffant, la garniture de soupape (1") comporte un corps de soupape et un tronçon de raccordement (11), qui se raccorde de manière étanche à un tronçon de liaison (14) de la pièce de liaison (2, 2') au moyen d'au moins un élément d'étanchéité (12, 12') périphérique, dans lequel la garniture de soupape (1") a une section transversale de passage, dans lequel le corps de soupape ferme, dans une position de fermeture, la section transversale de passage de manière étanche aux fluides et dégage, dans une position d'ouverture, la section transversale de passage, **caractérisé en ce que** deux éléments d'étanchéité (12, 12') périphériques et séparés sont agencés dans le tronçon de raccordement (11), dans lequel le premier élément d'étanchéité (12) est agencé au niveau d'une surface frontale (17), tournée vers le tronçon de liaison (14), du tronçon de raccordement (11) et le deuxième élément d'étanchéité (12') est agencé au niveau d'une surface enveloppante (18) extérieure du tronçon de raccordement (11) de telle sorte que du matériau d'étanchéité des éléments d'étanchéité (12, 12'), au moyen duquel le tronçon de raccordement (11) peut être rendu étanche par rapport au tronçon de liaison (14), dépasse de façon radiale de la surface enveloppante (18) extérieure du tronçon de raccordement (11) et de façon axiale de la surface frontale (17), tournée vers le tronçon de liaison (14), du tronçon de raccordement (11), dans lequel une étanchéification du tronçon de raccordement (11) par rapport au tronçon de liaison (14) est effectuée au moyen seulement d'un des éléments d'étanchéité (12, 12').

3. Ensemble composé d'une pièce de liaison et d'une garniture de soupape placée dans cette dernière, dans lequel la pièce de liaison est en particulier un élément destiné à relier deux plaques chauffantes d'un corps chauffant, la garniture de soupape présente un corps de soupape et un tronçon de raccordement, qui se raccorde de manière étanche à un tronçon de liaison de la pièce de liaison au moyen d'au moins un élément d'étanchéité périphérique, dans lequel la garniture de soupape a une section transversale de passage, dans lequel le corps de soupape ferme, dans une position de fermeture, la section transversale de passage de manière étanche aux fluides et dégage, dans une position d'ouverture, la section transversale de passage, **caractérisé en ce que** trois éléments d'étanchéité séparés sont agencés dans le tronçon de raccordement, dans lequel l'un des trois éléments d'étanchéité est agencé au niveau d'une surface frontale, tournée vers le tronçon de liaison, du tronçon de raccordement, un autre est agencé au niveau d'une surface enveloppante intérieure du tronçon de raccordement et un autre est agencé au niveau d'une surface enveloppante extérieure du tronçon de raccordement de telle sorte que du matériau d'étanchéité des éléments d'étanchéité, au moyen duquel le tronçon de raccordement peut être rendu étanche par rapport au tronçon de liaison, dépasse aussi bien de façon radiale de la surface enveloppante intérieure que de façon radiale de la surface enveloppante extérieure du tronçon de raccordement et de façon axiale de la surface frontale, tournée vers le tronçon de liaison, du tronçon de raccordement.

4. Ensemble selon l'une des revendications 1 à 3, **caractérisé en ce que** le matériau d'étanchéité est formé par un matériau élastomère.

5. Ensemble selon l'une des revendications 1 à 4, **caractérisé en ce que** le tronçon de raccordement (11) est réalisé, dans une zone de fixation (15), dans laquelle les éléments d'étanchéité (12, 12') sont fixés au tronçon de raccordement (11), sous la forme d'une rainure à contre-dépouille.
